(19) Europäisches Patentamt
European Patent Office
Office européen des brevets

(11) **EP 1 510 894 B1**

(12) **EUROPEAN PATENT SPECIFICATION**

(45) Date of publication and mention
of the grant of the patent:
**04.06.2008 Bulletin 2008/23**

(51) Int Cl.:
***G05B 19/427*** *(2006.01)* ***B25J 9/16*** *(2006.01)*

(21) Application number: **04254842.0**

(22) Date of filing: **12.08.2004**

(54) **Robot program position correcting apparatus**

Vorrichtung zur Korrektur der Position in einem Roboterprogramm

Appareil pour corriger une position d'un programme robot

(84) Designated Contracting States:
**DE**

(30) Priority: **27.08.2003 JP 2003302479**

(43) Date of publication of application:
**02.03.2005 Bulletin 2005/09**

(73) Proprietor: **FANUC LTD**
**Minamitsuru-gun,**
**Yamanashi 401-0597 (JP)**

(72) Inventors:
• **Watanabe, Atsushi**
**Suginami-ku**
**Tokyo 168-0072 (JP)**

• **Nagatsuka, Yoshiharu**
**c/o Fanuc**
**Minamitsuru-gun**
**Yamanashi 401-0511 (JP)**

(74) Representative: **Billington, Lawrence Emlyn et al**
**Haseltine Lake**
**Lincoln House**
**300 High Holborn**
**London WC1V 7JH (GB)**

(56) References cited:
**EP-A- 0 780 197        EP-A- 0 792 726**
**EP-A- 0 974 884**

**Description**

BACKGROUND OF THE INVENTION

1. Field of the Invention

The present invention relates to an apparatus for correcting positions in a robot operation program prepared by an off-line robot programming system.

2. Description of the Related Art

A robot operation program prepared by an off-line robot programming system cannot directly be used for operating a real robot, because the positional relationships among various devices including the robot, assumed by a computer, may deviate from the actual positional relationships among the devices. Conventionally, prior to applying an operation program prepared by an off-line robot programming system in actual cases, the operation program is actually applied to a robot on site to correct the teaching points one by one while executing the operation program.

This correction work requires great care and takes time because it requires moving a real robot on site and because it is difficult to know beforehand how the program prepared off-line will operate. Further, a trial and error process is also necessary for determining how to correct the teaching points on site.

It takes much time to obtain a final operation program for the robot by the method of applying an operation program prepared by an off-line robot programming system to a real robot and re-teaching the teaching points one by one while executing the program.

Such method requires operation of an actual robot for correction and confirmation on site, and it is frequently difficult for an on-site operator to know how the program prepared off-line will actually operate, so that such operation requires great care and hence takes much time. Further, a trial and error process is also necessary for determining how to modify the teaching points on site, which takes much time and requires much man-hours. As an operation program cannot be executed in safety without previous checking and modification, it is necessary to actually operate a robot beforehand by applying the operation program to the robot for checking and modification of the operation program

EP-A-0 780 197 discloses an apparatus and a method for controlling the movement of a robot in a position correcting process. An operator jog feeds a robot tool towards a new corrected teaching point Pa. When the robot tool enters the range of a predetermined radius from a teaching point Pt it is re-orientated towards it and is moved in the direction of it. When the tool reaches Pt it stops and the operator jog feeds the tool to point Pa. A correction button is then pressed and point Pt is replaced in the program by corrected teaching point Pa.

EP-A-0 792 726 describes a teaching pendant for a robot. It comprises a display device having a graphic display function for displaying data. Display data such as taught points and movement of the robot, is generated by a display data generating means based on a robot program.

SUMMARY OF THE INVENTION

A robot program position correcting apparatus for correcting the position of a teaching point in a program for operating a robot, according to the present invention, comprises: means for stopping execution of the program when receiving a stop command that is generated when the robot is at a distance away from a next teaching point of which position is to be corrected; means for displaying said next teaching point of which position is to be corrected on a screen of a display means when execution of the program is stopped; means for moving the robot by jog feeding from a position where execution of the program is stopped; and means for storing the current position of the robot and applying it on said next teaching point of which position is to be corrected when the position of the teaching point is corrected.

The robot program position correcting apparatus according to the present invention enables easy and efficient correction of teaching point information in the robot operation program prepared by the off-line robot programming system.

The robot program position correcting apparatus according to the present invention can also take on the following embodiments.

The robot program position correcting apparatus may further comprise means for obtaining a position correcting amount from the position of the teaching point before correction and the position of the teaching point after correction; and means for correcting, based on the obtained position correcting mount, the position of another teaching point or positions of other teaching points as well as that of the next teaching point of which position is to be corrected.

The robot program position correcting apparatus may further comprise: means for displaying the next teaching point of which position is to be corrected and another teaching point simultaneously on the display means; and means for highlighting the next teaching point of which position is to be corrected.

The robot program position correcting apparatus may further comprise means for positioning and displaying the robot, a workpiece, and a peripheral device, together with the next teaching point of which position is to be corrected, on the screen of the display means.

The robot program position correcting apparatus may further comprise means for displaying positional relationships among the robot, the workpiece, and the peripheral device on the display means according to the position correcting amount of the teaching point in conformity with positional relationships at a working site of the robot.

The robot program position correcting apparatus may further comprise means for displaying on the screen of the display means a distance between the current position of the robot and the next teaching point of which position is to be corrected during execution of the program. In this case, the distance may be displayed in a numerical value or in a color.

The robot program position correcting apparatus may further comprise means for confirming operation of the robot by means of simulation on the screen of the display means, prior to execution of the robot operation program in which the position of the teaching point has been corrected.

The robot program position correcting apparatus may further comprise means for indicating presence or absence of interference of the robot with a workpiece and a peripheral device on the display means during the simulation of the operation of the robot.

The robot program position correcting apparatus may further comprise means for displaying a robot motion trajectory on the screen of the display means during execution of the robot operation program in which the position of the teaching point has been corrected.

The robot program position correcting apparatus may further comprise: means for setting a predetermined distance preceding to arrival at the teaching point of which position is to be corrected; and means for generating the stop command automatically when the robot reaches the position retreating from the teaching point of which position is to be corrected by the predetermined distance.

The display means may be disposed on a teaching pendant, and the teaching pendant may further comprise stopping operation means for generating the stop command, means for executing the jog feeding, and means for performing a position correcting operation.

The display means may be disposed on a personal computer, and the personal computer may further comprise stopping operation means for generating the stop command, means for executing the jog feeding, and means for performing a position correcting operation.

According to the present invention, when a robot operation program prepared by an off-line robot programming system is adapted to on-site working conditions, the adaptation requires fewer man-hours and consequently a robotized production line can be set up in a shorter time. As the operation of the robot can be confirmed beforehand on the screen of the display means, the job can be done easily by anyone, and the real robot can be operated safely. As a result, time is not wasted, the operation of the robot can be completed quickly, and the set-up time can be reduced.

BRIEF DESCRIPTION OF THE DRAWINGS

The forgoing and other objects and feature of the invention will be apparent from the following description of preferred embodiments of the invention with reference to the accompanying drawings, in which

FIG. 1 is a schematic diagram of an embodiment of a robot program position correcting apparatus according to the present invention.
FIG. 2 is a block diagram illustrating essential components of the robot controller in the robot program position correction apparatus in FIG. 1.
FIG. 3 is a flowchart illustrating a process of program position correcting operation executed by the robot program position correction apparatus in FIG. 1.
FIG. 4 shows an example of teaching points displayed on the screen of the teaching pendant in the robot program position correcting apparatus in FIG 1.
FIG. 5 shows an example of a target teaching point highlighted on the screen of the teaching pendant in FIG. 1.
FIG. 6 illustrates how a distance to the target teaching point is displayed in color on the screen of the teaching pendant in FIG. 1.
FIG 7 illustrates a teaching point correction matrix displayed on the screen of the teaching pendant in FIG 1.
FIG. 8 illustrates how the arrangement position of a peripheral device is corrected in a three-dimensional computer graphics image displayed on the screen of the teaching pendant in FIG. 1.
FIG. 9 shows an example of a TCP (Tool Center Point) trajectory of the robot displayed on the screen of the teaching pendant in FIG. 1 during actual execution of the robot operation program.

DESCRIPTION OF THE EMBODIMENTS

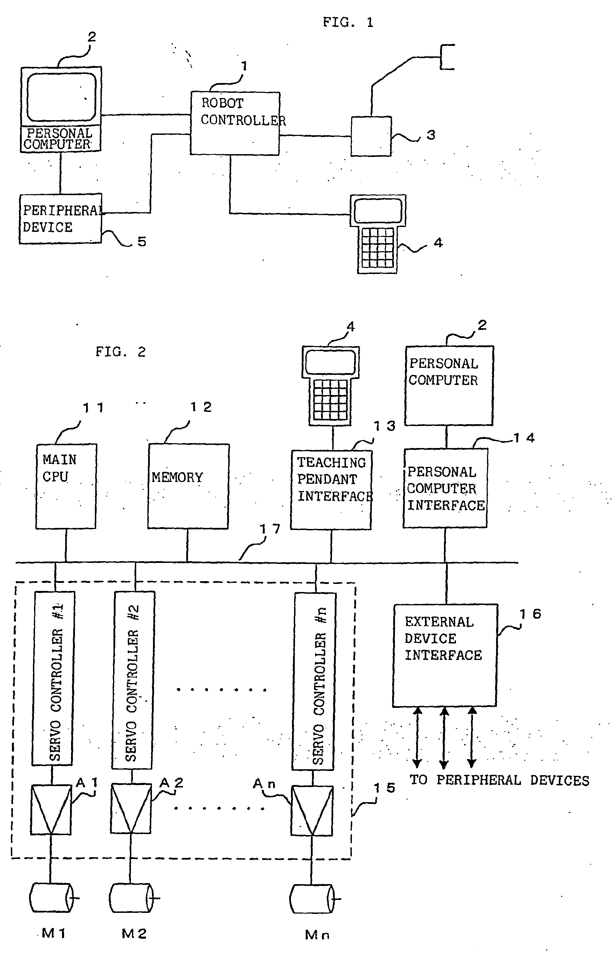

FIG. 1 is a schematic diagram of an embodiment of the present invention. In this embodiment, a robot program position correcting apparatus comprises a robot controller 1, an information processor 2, and a teaching pendant 4 that is connected to the robot controller 1 and has a graphic display function. The information processor 2 comprises a personal computer and is hereinafter referred to as a personal computer.

The robot controller 1 is connected to servo motors (not shown) that drive joints in a robot mechanical section 3. The robot controller 1 is also connected to the personal computer 2 via a communication link, and to a peripheral device 5, as well as to the teaching pendant 4 having a graphic display function. The peripheral device 5 is also connected to the personal computer 2 via a communication line.

FIG. 2 is a block diagram illustrating essential components of the robot controller 1. The robot controller 2 has the same configuration as conventional robot controllers. A bus 17 connects a main processor 11, a memory 12 including RAM, ROM, and nonvolatile memory such as EEPROM, a teaching pendant interface 13, a personal computer interface 14, an external device interface 16 for the peripheral device 5 and other external devices, and a servo control section 15. The teaching pendant 4 is connected to the teaching pendant interface 13, while the personal computer 2 is connected to the personal computer interface 14.

A system program that supports the basic functions of the robot and robot controller is stored in the ROM in the memory 12. A robot operation program prepared by an off-line robot programming system and entered via a communication line or a storage medium (both not shown) is stored, together with its associated data settings, in the nonvolatile memory in the memory 12. The RAM in the memory 12 is used as a temporary storage area for storing data temporarily during various arithmetic operations performed by the processor in the robot controller 1.

The servo control section 15 includes servo controllers #1-#n (n: total number of axes in the robot, plus the number of movable axes of an optional tool attached to a wrist of the robot). The servo controllers #1-#n each comprise a processor, ROM, RAM, etc. and execute position and speed loop control for a servo motor for driving each axis and further execute current loop control. Thus, each servo controller is configured as a digital servo controller that executes loop control for position, speed, and current.

Output from the servo controllers #1-#n controls, via the amplifiers A1-An, the driving of the servo motors M1-Mn associated with respective joint axes in the robot mechanical section 3. The servo motors M1-Mn are each equipped with a position/speed detector (not shown) which detects and feeds back the position/speed of each servo motor to each of the servo controllers #1-#n. Sensors and other devices provided on the peripheral device 5 and robot mechanical section 3 are connected to the external device interface 16.

The robot controller 1 described above has the same configuration as conventional robot controllers. In the present invention, a personal computer 2 is connected to such a robot controller so that the robot controller and the personal computer 2, together with the teaching pendant 4 with a graphic display function, constitute a robot program position correcting apparatus.

In the personal computer 2, which has the same hardware configuration as known personal computers, the memory stores layout data about the robot, peripheral devices, and attachments located in a work cell where the robot is positioned. This memory also stores software for creating a three-dimensional CG (Computer Graphics) image of a work cell based on the stored layout data, and displaying the created three-dimensional CG image on the display means (monitor) of the personal computer 2 for simulating and monitoring the robot operation program, as well as software for displaying the robot operation program and the robot trajectory.

The teaching pendant 4 has a graphic display function that can display the CG image of the work cell received from the personal computer 2. This graphic display function can also display the teaching points and robot motion trajectories specified by the robot operation program. Generally, the display screen of the teaching pendant 4 is divided into two screens. One screen is a menu-guided user interface screen; the other screen displays images including a three-dimensional CG image of a work cell. Either screen can be displayed by itself as a full screen.

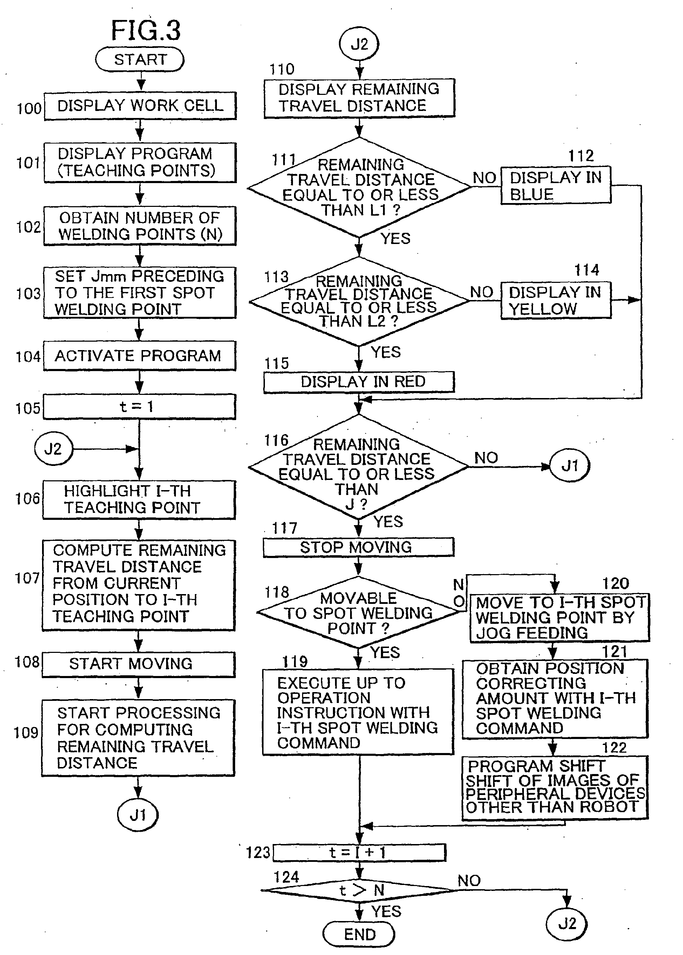

When a robot operation program is specified and a program position correcting command is entered via the personal computer 2 or the teaching pendant 4, the robot controller 1 starts running a menu-guided software program which is executed step-by-step on the teaching pendant and performs the processing shown in FIG 3.

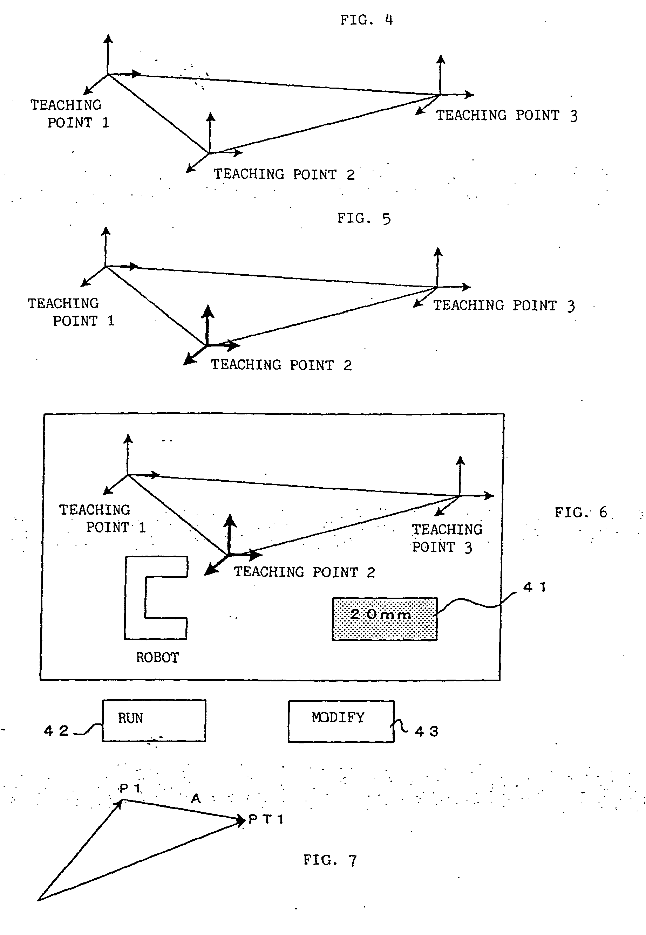

First, a three-dimensional CG image created in the personal computer 2 is sent to the robot controller 1 and displayed on the display screen of the teaching pendant 4 (Step 100); meanwhile, the robot operation program stored in the memory 12 of the robot controller 1 is read by the personal computer 2, processed for screen display, and displayed together with the three-dimensional CG image on the monitor of the personal computer 2. This image is sent to the robot controller 1. The robot controller 1 displays teaching points in the three-dimensional CG image on the screen of the teaching pendant 4, with their coordinates and lines connecting them showing the robot operation sequence as illustrated in FIG. 4 (Step 101).

The robot controller 1 counts and memorizes the number N of teaching points for spot weld as the objects to be corrected in the positions in the target robot operation program (Step 102). The robot controller 1 also prompts an operator via the menu-guided user interface screen of the teaching pendant 4 to set a distance J by which the robot is caused to stop at a point retreating from a teaching point for spot weld (Step 103). In FIG. 3, which shows an example of a robot operation program adapted for spot welding, the teaching points of which positions are to be corrected are teaching points for spot weld and the distance Jmm preceding to the teaching point is set.

Next, the robot operation program is started (Step 104), a counter I for repeating processing for the number of teaching points for spot weld is initialized to "1" (Step 105). Then, the I-th teaching point for spot weld indicated by the value of the counter I is highlighted as shown in FIG. 5 (Step 106). FIG. 5 shows an example where I is 2 and the second teaching point for spot weld is highlighted.

Next, the remaining travel distance from the current robot position (i.e., TCP (Tool Center Point) position) to the I-th teaching point for spot weld is computed and stored in a register (Step 107); then the robot mechanical section 3 is activated and starts moving according to the robot operation program (Step 108). The remaining travel distance stored in the register is continually updated as the robot moves (Step 109). The remaining travel distance stored in the register is displayed in a distance indication box 41 on the three-dimensional CG image screen as shown in FIG. 6 (Step 110).

The remaining travel distance is compared with preset distances L1 and L2 (Steps 111 and 113). The distances L1 and L2 are optional values that can be preset via a keyboard of the teaching pendant 4 or other input means and used for indicating collision risk levels by displaying the distance indication box 41 in different colors according to the remaining travel distance. In this embodiment, the distance indication box 41 is displayed in blue when the remaining travel distance is long, displayed in yellow when the remaining travel distance is medium, and displayed in red when the robot is close to the teaching point for spot weld and the remaining travel distance is short. For example, if L1 is set to 100 mm and L2 is set 50 mm, the distance indication box 41 is displayed in blue while the remaining travel distance is equal to or greater than L1=100, displayed in yellow while the remaining travel distance is between L1 and L2 (between 100 mm and 50 mm in this example), and displayed in red while the remaining travel distance is equal to or less than 50 mm (Steps 111 to 115).

Next, the remaining travel distance stored in the register is checked to see if it is equal to or less than the distance Jmm set at Step 103 (Step 116); if it is more than Jmm, processing returns to Step 110 to display the remaining travel distance and perform the display color switching processing. If the remaining travel distance is equal to or less than Jmm, the robot is caused to stop (Step 117). In this way, the robot mechanical section 3 stops at a point retreating from the I-th teaching point for spot weld by the set distance Jmm.

Then, judging from the current status of the robot mechanical section 3 and its positional relationship with the workpiece and also from the three-dimensional CG image on the teaching pendant monitor screen, the operator determines whether execution of the robot operation program can be continued as it is. If so, the operator selects a Run button 42 on the menu-guided user interface screen (Step 118). This causes the robot operation program to be executed up to the I-th operation instruction with a spot welding command (Step 119).

In this case, however, current for spot welding is not supplied, so the spot welding is not actually performed. Then, the counter I is incremented by 1 (Step 123) and its value is checked. If the value of the counter I is equal to or less than the number N of teaching points for spot weld (Step 124), the processing returns to Step 106 and processing in Step 106 and subsequent steps are executed.

After the robot stops, the operator checks the status of the robot mechanical section 3. If moving the robot further as taught would risk interference with an obstacle, the operator operates a jogging button on the teaching pendant 4 to jog the robot mechanical section 3 to a new spot welding point where no interference occurs. Then, the operator selects a Correct button 43 on the menu-guided user interface screen and enters a correcting command (Step 120). The processor in the robot controller 1 computes a correcting amount for changing the I-th teaching point for spot weld in the robot operation program to the touched-up point to which the actual robot was moved (Step 121). More specifically, assuming that the position of the I-th teaching point for spot weld in the robot operation program is P1 and the touched-up position to which the actual robot is moved is TP1, a correction matrix A is obtained as follows (1). Then, the I-th teaching point for spot weld is changed from position P1 to position TP1 by this correction matrix A as shown in FIG. 7

$$A = \mathrm{Inv}\ P1\ PT1 \quad \dots\ (1)$$

Each teaching point position in the robot operation program is multiplied on the right by this correction matrix A to obtain a new teaching point position to which the teaching point is shifted in the robot operation program. Further, this correction matrix A is also used to shift the positional relationship of the peripheral devices other than the robot in the three-dimensional CG image displayed on the monitor of the teaching pendant 4 (Step 122).

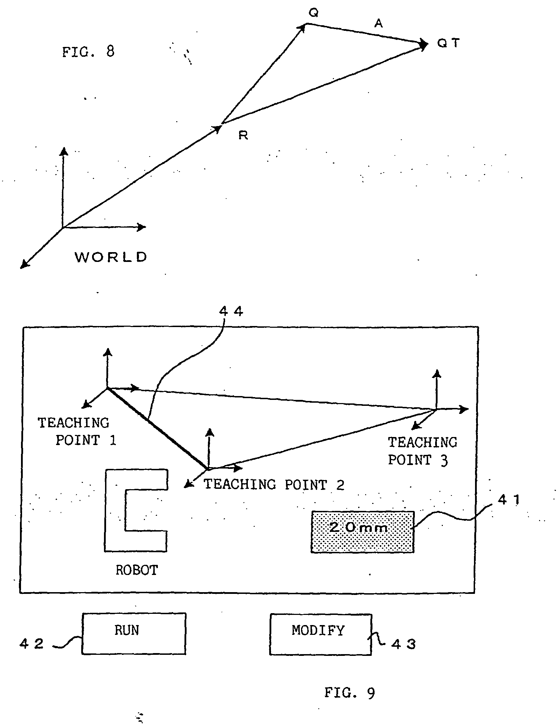

FIG. 8 illustrates the shifting of the position of a peripheral device other than the robot.

In FIG. 8,

R is the robot base coordinate system as viewed from the world coordinate system;
Q is the position of a peripheral device in the software for displaying the peripheral device viewed from the robot on the three-dimensional CG image screen;
A is the correction matrix used for correcting the teaching point; and
QT is the corrected position of the peripheral device.

The display position Q in the screen display software before the correction is multiplied on the right by the correction matrix A to obtain the new position QT of the peripheral device and shift its display position from Q to QT on the three-dimensional CG image screen.

Then, processing proceeds to the above-described Step 123.

As described above, the robot is caused to stop at a point retreating from each teaching point for spot weld by the set distance Jmm, in order to let the operator decide whether execution can continue as it is and, if necessary, correct the position of the teaching point for spot weld by moving the robot by jog feeding. As the robot generally moves according to the robot operation program and stops at a point near each teaching point for spot weld, interference with other objects can be avoided, and the operator can correct the teaching points easily, in a short time.

In the embodiment described above, all the teaching points in the robot operation program are shifted. Alternatively, the teaching points to be shifted may be limited, however, to the I-th teaching point for spot weld. Further, a certain area may be specified, and the teaching points in the specified area may be shifted.

In the embodiment described above, a distance of Jmm receding from the teaching points for spot weld is set; and the robot moves automatically until it reaches a point receding from each teaching point by the distance Jmm and then stops automatically. Alternatively, however, a stop command button or other stop commanding means may be provided on the teaching pendant 4, and the robot may be caused to move according to the robot operation program until the operator manipulates this stop commanding means. In this case, the robot is caused to stop when an operator enters a stop command, instead of stopping automatically.

The robot operation program thus corrected is tested using a simulation program on the personal computer 2 before the robot is actually operated. The simulation program displays the simulated robot operation on the personal computer monitor screen, checks for interference as is conventionally done, and displays interference if any. This simulation is made using the corrected three-dimensional CG image, by sending the corrected peripheral device location data obtained in Step 122 to the personal computer 2. This simulation image is also sent through the robot controller 1 to the teaching pendant 4, so the interference check can also be made on the screen of the teaching pendant 4. Accordingly, the operator can move the real robot safely.

When the robot operation program is run and the robot actually operates, the trajectory of the robot TCP is drawn on the monitor screen of the personal computer 2. This TCP trajectory is also displayed on the three-dimensional CG image screen of the teaching pendant 4 as shown in FIG. 9, where the teaching points are connected by straight lines according to the robot operation program.

The user interface function implemented in the teaching pendant 4 in the embodiment described above may be transferred to the personal computer 2 and the teaching pendant 2 may be omitted. In this case, the personal computer 2, which is already equipped with such functions as a work cell display function, a robot simulation function, an interference check function, and a robot operation program display function, will additionally need such functions as a robot operation program execution command, a program stop command, a robot jog command, a teaching point correcting command, and a distance display function indicating a distance between the current TCP position and the next teaching point.

**Claims**

1. A robot program position correcting apparatus for correcting the position of a teaching point in a program for operating a robot, comprising:

means of stopping execution of the program when receiving a stop command (117);
means for displaying a next teaching point of which position is to be corrected on a screen of a display means when execution of said program is stopped;
means for moving the robot by jog feeding from a position where execution of said program is stopped (120); and
means for storing the current position of the robot and applying it on said next teaching point of which position is to be corrected when the position of the teaching point is corrected (121);

**characterised in that** the stop command is generated (117) when the robot is at a predetermined distance away from said next teaching point of which position is to be corrected.

2. The robot program position correcting apparatus according to claim 1, further comprising:

means for obtaining a position correcting amount from the position of the teaching point before correction and the position of the teaching point after correction; and
means for correcting, based on said obtained position correcting amount, the position of another teaching point or positions of other teaching points as well as that of said next teaching point of which position is to be corrected.

3. The robot program position correcting apparatus according to claim 1, further comprising:

means for displaying said next teaching point of which position is to be corrected and another teaching point simultaneously on said display means; and
means for highlighting said next teaching point of which position is to be corrected.

4. The robot program position correcting apparatus according to claim 1, further comprising means for positioning and displaying said robot, a workpiece, and a peripheral device, together with said next teaching point of which position is to be corrected, on the screen of said display means.

5. The robot program position correcting apparatus according to claim 4, further comprising means for displaying positional relationships among said robot, said workpiece, and said peripheral device on said display means according to said position correcting amount of the teaching point in conformity with positional relationships at a working site of the robot.

6. The robot program position correcting apparatus according to claim 1, further comprising means for displaying on the screen of said display means a distance between the current position of the robot and the next teaching point of which position is to be corrected during execution of said program.

7. The robot program position correcting apparatus according to claim 6, wherein said distance is displayed in a numerical value.

8. The robot program position correcting apparatus according to claim 7, wherein said distance is displayed in a color.

9. The robot program position correcting apparatus according to claim 1, further comprising means for confirming operation of the robot by means of simulation on the screen of said display means, prior to execution of the robot operation program in which the position of the teaching point has been corrected.

10. The robot program position correcting apparatus according to claim 9, further comprising means for indicating presence or absence of interference of said robot with a workpiece and a peripheral device on said display means during the simulation of said operation of the robot.

11. The robot program position correcting apparatus according to claim 1, further comprising means for displaying a robot motion trajectory on the screen of said display means during execution of the robot operation program in which the position of the teaching point has been corrected.

12. The robot program position correcting apparatus according to claim 1, further comprising:

means for setting the predetermined distance preceding to arrival at the teaching point of which position is to be corrected; and
means for generating said stop command automatically when the robot reaches the position retreating from said teaching point of which position is to be corrected by said predetermined distance.

13. The robot program position correcting apparatus according to claim 1, wherein said display means is disposed on a teaching pendant, and the teaching pendant further comprises stopping operation means for generating said stop command, means for executing said jog feeding, and means for performing a position correcting operation.

14. The robot program position correcting apparatus according to claim 1, wherein said display means is disposed on a personal computer, and the personal computer further comprises stopping operation means for generating said stop command, means for executing said jog feeding, and means for performing a position correcting operation.

**Patentansprüche**

1. Roboterprogramm-Positionskorrekturgerät zum Korrigieren der Position eines Einlernpunktes in einem Programm zum Betreiben eines Roboters, umfassend:

Vorrichtungen zum Anhalten der Ausführung des Programms bei Erhalt eines Stoppbefehls (117);
Vorrichtungen zum Anzeigen eines nächsten Einlernpunktes, dessen Position korrigiert werden soll, auf einem Bildschirm einer Anzeigevorrichtung, wenn die Ausführung des Programms angehalten wird;
Vorrichtungen zum Bewegen des Roboters mittels Handvorschub von einer Position, an der die Ausführung des Programms angehalten wird (120); und
Vorrichtungen zum Speichern der aktuellen Position des Roboters und Anwenden auf den nächsten Einlernpunkt, dessen Position korrigiert werden soll, wenn die Position des Einlernpunktes korrigiert wird (121);

**dadurch gekennzeichnet, dass**
der Stoppbefehl erzeugt wird (117), wenn sich der Roboter in einer festgelegten Entfernung von dem nächsten Einlernpunkt befindet, dessen Position korrigiert werden soll.

2. Roboterprogramm-Positionskorrekturgerät nach Anspruch 1, zudem umfassend:

Vorrichtungen zum Erhalt eines Positionskorrekturbetrags aus der Position des Einlernpunktes vor der Korrektur und der Position des Einlernpunktes nach der Korrektur; und
Vorrichtungen zum Korrigieren der Position eines weiteren Einlernpunktes oder Positionen anderer Einlernpunkte sowie der Position des nächsten Einlernpunktes, der korrigiert werden soll, auf der Basis des erhaltenen Positionskorrekturbetrages.

3. Roboterprogramm-Positionskorrekturgerät nach Anspruch 1, zudem umfassend:

Vorrichtungen zum zeitgleichen Anzeigen des nächsten Einlernpunktes, dessen Position korrigiert werden soll, und eines weiteren Einlernpunktes auf der Anzeigevorrichtung; und

Vorrichtungen zum Hervorheben des nächsten Einlernpunktes, dessen Position korrigiert werden soll.

4. Roboterprogramm-Positionskorrekturgerät nach Anspruch 1, zudem umfassend Vorrichtungen zum Positionieren und Anzeigen des Roboters, eines Werkstücks und eines Außengerätes, zusammen mit dem nächsten Einlernpunkt, dessen Position korrigiert werden soll, auf dem Bildschirm der Anzeigevorrichtung.

5. Roboterprogramm-Positionskorrekturgerät nach Anspruch 4, zudem umfassend Vorrichtungen zum Anzeigen der Positionsbeziehung zwischen dem Roboter, dem Werkstück, und dem Außengerät auf der Anzeigevorrichtung gemäß dem Positionskorrekturbetrag des Einlernpunktes in Übereinstimmung mit den Positionsbeziehungen an einer Arbeitsstelle des Roboters.

6. Roboterprogramm-Positionskorrekturgerät nach Anspruch 1, zudem umfassend Vorrichtungen zum Anzeigen einer Entfernung zwischen der aktuellen Position des Roboters und dem nächsten Einlernpunkt, dessen Position korrigiert werden soll, während der Ausführung des Programms auf dem Bildschirm der Anzeigevorrichtung.

7. Roboterprogramm-Positionskorrekturgerät nach Anspruch 6, wobei die Entfernung in einem numerischen Wert angezeigt wird.

8. Roboterprogramm-Positionskorrekturgerät nach Anspruch 7, wobei die Entfernung farbig angezeigt wird.

9. Roboterprogramm-Positionskorrekturgerät nach Anspruch 1, zudem umfassend Vorrichtungen zum Bestätigen des Roboterbetriebs mittels Simulation auf dem Bildschirm der Anzeigevorrichtung vor der Ausführung des Roboterbetriebsprogramms, in dem die Position des Einlernpunktes korrigiert wurde.

10. Roboterprogramm-Positionskorrekturgerät nach Anspruch 9, zudem umfassend Vorrichtungen, mit denen angezeigt wird, ob der Roboter von einem Werkstück und einem Außengerät gestört wird oder nicht, auf der Anzeigevorrichtung während der Simulation des Roboterbetriebs.

11. Roboterprogramm-Positionskorrekturgerät nach Anspruch 1, zudem umfassend Vorrichtungen zum Anzeigen einer Roboter-Bewegungsbahn auf dem Bildschirm der Anzeigevorrichtung bei der Ausführung des Roboterbetriebsprogramms, in dem die Position des Einlernpunktes korrigiert wurde.

12. Roboterprogramm-Positionskorrekturgerät nach Anspruch 1, zudem umfassend:

Vorrichtungen zum Einstellen der festgelegten Entfernung vor dem Eintreffen am Einlernpunkt, dessen Position korrigiert werden soll; und Vorrichtungen zum automatischen Erzeugen des Stoppbefehls, wenn der Roboter den Positionsrückzug von dem Einlernpunkt erreicht, dessen Position um die festgelegte Entfernung korrigiert werden soll.

13. Roboterprogramm-Positionskorrekturgerät nach Anspruch 1, wobei sich die Anzeigevorrichtung auf einer Programmierkonsole befindet, und die Programmierkonsole weiter umfasst Anhaltebetriebsvorrichtungen zum Erzeugen des Stoppbefehls, Vorrichtungen zum Ausführen des Handvorschubs, und Vorrichtungen zum Durchführen eines Positionskorrekturbetriebs.

14. Roboterprogramm-Positionskorrekturgerät nach Anspruch 1, wobei sich die Anzeigevorrichtung auf einem Personal-Computer befindet, und der Personal-Computer zudem umfasst Anhaltebetriebsvorrichtungen zum Erzeugen des Stoppbefehls, Vorrichtungen zum Ausführen des Handvorschubs und Vorrichtungen zum Durchführen eines Positionskorrekturbetriebs.

**Revendications**

1. Appareil pour corriger une position d'un programme robot pour corriger la position d'un point d'apprentissage dans un programme de fonctionnement d'un robot, comprenant :

des moyens pour arrêter l'exécution du programme lors de la réception d'une instruction d'arrêt (117) ; des moyens pour afficher un point d'apprentissage suivant dont la position doit être corrigée sur un écran d'un moyen d'affichage lorsque l'exécution dudit programme est arrêtée ; des moyens pour déplacer le robot par une amenée d'avance continue d'une position où l'exécution dudit programme a été arrêtée, (120) ; et des moyens pour stocker la position actuelle du robot et pour l'appliquer au point d'apprentissage suivant précité dont la position doit être corrigée lorsque la position du point d'apprentissage a été corrigée (121) ;

**caractérisé en ce que** l'instruction d'arrêt est produite 117 lorsque le robot se trouve à une distance prédéterminée dudit point d'apprentissage suivant dont la position doit être corrigée.

**2.** Appareil pour corriger une position d'un programme robot selon la revendication 1, comprenant en outre:

des moyens pour obtenir une quantité de correction de position à partir de la position du point d'apprentissage avant la correction et de la position du point d'apprentissage après la correction ; et

des moyens pour corriger, sur la base de ladite quantité de correction de position obtenue, la position d'un autre point d'apprentissage ou les positions d'autres points d'apprentissage ainsi que celle dudit point d'apprentissage suivant dont la position doit être corrigée.

**3.** Appareil pour corriger une position d'un programme robot selon la revendication 1, comprenant en outre :

des moyens pour afficher ledit point d'apprentissage suivant dont la position doit être corrigée et un autre point d'apprentissage simultanément sur ledit moyen d'affichage ; et

des moyens pour mettre en évidence ledit point d'apprentissage suivant dont la position doit être corrigée.

**4.** Appareil pour corriger une position d'un programme robot selon la revendication 1, comprenant en outre des moyens pour positionner et afficher ledit robot, une pièce et un dispositif périphérique, conjointement avec ledit point d'apprentissage suivant dont la position doit être corrigée, sur l'écran dudit moyen d'affichage.

**5.** Appareil pour corriger une position d'un programme robot selon la revendication 4, comprenant en outre des moyens pour afficher les relations positionnelles parmi ledit robot, ladite pièce et ledit dispositif périphérique sur ledit moyen d'affichage selon ladite quantité de correction de position du point d'apprentissage en conformité avec des relations positionnelles à un site de travail du robot.

**6.** Appareil pour corriger une position d'un programme robot selon la revendication 1, comprenant en outre des moyens pour afficher sur l'écran dudit moyen d'affichage une distance entre la position actuelle du robot et le point d'apprentissage suivant dont la position doit être corrigée pendant l'exécution dudit programme.

**7.** Appareil pour corriger une position d'un programme robot selon la revendication 6, où ladite distance est affichée en valeur numérique.

**8.** Appareil pour corriger une position d'un programme robot selon la revendication 7, où ladite distance est affichée en couleur.

**9.** Appareil pour corriger une position d'un programme robot selon la revendication 1, comprenant en outre des moyens pour confirmer l'opération du robot par simulation sur l'écran dudit moyen d'affichage, avant l'exécution du programme d'opération de robot dans lequel la position du point d'apprentissage a été corrigée.

**10.** Appareil pour corriger une position d'un programme robot selon la revendication 9, comprenant en outre des moyens pour indiquer la présence ou l'absence de l'interférence dudit robot avec une pièce et un dispositif périphérique sur ledit moyen d'affichage pendant la simulation dudit fonctionnement du robot.

**11.** Appareil pour corriger une position d'un programme robot selon la revendication 1, comprenant en outre des moyens pour afficher une trajectoire de mouvement de robot sur l'écran dudit moyen d'affichage pendant l'exécution du programme de fonctionnement du robot dans lequel la position du point d'apprentissage a été corrigée.

**12.** Appareil pour corriger une position d'un programme robot selon la revendication 1, comprenant en outre :

des moyens pour régler la distance prédéterminée avant l'arrivée au point d'apprentissage dont la position doit être corrigée ; et

des moyens pour engendrer ladite instruction de commande automatiquement lorsque le robot atteint la position en retrait dudit point d'apprentissage dont la position doit être corrigée selon la distance prédéterminée.

**13.** Appareil pour corriger une position d'un programme robot selon la revendication 1, où ledit moyen d'affichage est disposé sur un pendant d'apprentissage, et le pendant d'apprentissage comprend en outre l'arrêt du moyen d'opération pour engendrer ladite instruction d'arrêt, des moyens pour exécuter ladite amenée d'avance continue et des moyens pour exécuter une opération de correction de position.

**14.** Appareil pour corriger une position d'un programme robot selon la revendication 1, où ledit moyen d'affichage est disposé sur un ordinateur personnel, et l'ordinateur personnel comprend en outre des moyens de fonctionnement d'arrêt pour engendrer ladite instruction d'arrêt, des moyens pour exécuter ladite amenée d'avance continue et des moyens pour exécuter une opération de correction de la position.

FIG. 1

FIG. 2

TO PERIPHERAL DEVICES

# FIG.3

START

100 DISPLAY WORK CELL

101 DISPLAY PROGRAM (TEACHING POINTS)

102 OBTAIN NUMBER OF WELDING POINTS (N)

103 SET Jmm PRECEDING TO THE FIRST SPOT WELDING POINT

104 ACTIVATE PROGRAM

105 i = 1

(J2)

106 HIGHLIGHT i-TH TEACHING POINT

107 COMPUTE REMAINING TRAVEL DISTANCE FROM CURRENT POSITION TO i-TH TEACHING POINT

108 START MOVING

109 START PROCESSING FOR COMPUTING REMAINING TRAVEL DISTANCE

(J1)

(J2)

110 DISPLAY REMAINING TRAVEL DISTANCE

111 REMAINING TRAVEL DISTANCE EQUAL TO OR LESS THAN L1? — NO → 112 DISPLAY IN BLUE

YES

113 REMAINING TRAVEL DISTANCE EQUAL TO OR LESS THAN L2? — NO → 114 DISPLAY IN YELLOW

YES

115 DISPLAY IN RED

116 REMAINING TRAVEL DISTANCE EQUAL TO OR LESS THAN J? — NO → (J1)

YES

117 STOP MOVING

118 MOVABLE TO SPOT WELDING POINT? — NO → 120 MOVE TO i-TH SPOT WELDING POINT BY JOG FEEDING → 121 OBTAIN POSITION CORRECTING AMOUNT WITH i-TH SPOT WELDING COMMAND → 122 PROGRAM SHIFT SHIFT OF IMAGES OF PERIPHERAL DEVICES OTHER THAN ROBOT

YES → 119 EXECUTE UP TO OPERATION INSTRUCTION WITH i-TH SPOT WELDING COMMAND

123 i = i + 1

124 i > N? — NO → (J2)

YES

END

FIG. 4

TEACHING
POINT 1

TEACHING POINT 3

TEACHING POINT 2

FIG. 5

TEACHING
POINT 1

TEACHING POINT 3

TEACHING POINT 2

TEACHING
POINT 1

TEACHING POINT 2

TEACHING
POINT 3

FIG. 6

4 1

2 0 m m

ROBOT

4 2 — RUN

MODIFY — 4 3

P 1

A

P T 1

FIG. 7

FIG. 8

Q    A    QT

R

WORLD

44

TEACHING
POINT 1

TEACHING POINT 2

TEACHING
POINT 3

41

20mm

ROBOT

42    RUN    MODIFY    43

FIG. 9

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 0780197 A
- EP 0792726 A